**Europäisches Patentamt**

**European Patent Office**

**Office européen des brevets**

(19)

(11) Veröffentlichungsnummer: **0 401 251 B1**

## (12) EUROPÄISCHE PATENTSCHRIFT

(45) Veröffentlichungstag der Patentschrift:
02.10.91 Patentblatt 91/40

(51) Int. Cl.⁵: **B60K 15/00, F02M 25/08**

(21) Anmeldenummer: **89902381.6**

(22) Anmeldetag: **02.02.89**

(86) Internationale Anmeldenummer:
**PCT/EP89/00095**

(87) Internationale Veröffentlichungsnummer:
**WO 89/08034 08.09.89 Gazette 89/21**

(54) **KRAFTFAHRZEUG.**

(30) Priorität: 24.02.88 DE 3805711

(43) Veröffentlichungstag der Anmeldung:
12.12.90 Patentblatt 90/50

(45) Bekanntmachung des Hinweises auf die
Patenterteilung:
02.10.91 Patentblatt 91/40

(84) Benannte Vertragsstaaten:
DE FR GB

(56) Entgegenhaltungen:
DE-A- 3 346 103
FR-A- 1 033 383
FR-A- 1 250 283

(73) Patentinhaber: AUDI AG
Auto-Union-Strasse 1 Postfach 220
W-8070 Ingolstadt (DE)

(72) Erfinder: LEITERMANN, Wulf
Kirschenweg 9
W-7107 Bad Wimpfen (DE)

(74) Vertreter: Speidel, Eberhardt
Postfach 1320 Waldpromenade 26
W-8035 Gauting (DE)

EP 0 401 251 B1

## Beschreibung

Die Erfindung bezieht sich auf ein Kraftfahrzeug gemäß dem Oberbegriff des Anspruchs 1.

Gesetzliche Bestimmungen schreiben vor, daß Kraftstoffdämpfe aus dem Kraftstoffbehälter nicht in die Atmosphäre entlassen werden dürfen. Zur Erfüllung dieser Bestimmung werden diese Kraftstoffdämpfe über einen sogenannten Kanister, der im allgemeinen Aktivkohle als Filtermaterial enthält, dem Ansaugsystem der Brennkraftmaschine zugeführt. Dieser Filter fängt in erster Linie die beim Stillstand des Fahrzeuges entstehenden Kraftstoffdämpfe auf und wird dadurch regeneriert, daß im Betrieb Luft aus der Atmosphäre durch den Filter hindurch angesaugt wird. Es handelt sich hierbei um verhältnismäßig kleine Mengen. Schwierigkeiten bereitet nun die Erfüllung der Forderung, die beim Betanken aus dem Kraftstoffbehälter verdrängten Kraftstoffdämpfe aufzufangen, da deren Volumen verhältnismäßig groß ist und einen entsprechend großen Kanister erforderlich macht, um das Übertreten von Kraftstoffdämpfen in die Atmosphäre wirksam zu verhindern. Die Unterbringung eines großen Kanisters bereitet aufgrund der äußerst beengten Platzverhältnisse im Motorraum des Kraftfahrzeuges erhebliche Probleme.

Der Erfindung liegt die Aufgabe zugrunde, ein Kraftfahrzeug der gattungsgemäßen Art zu schaffen, bei dem auch ein großer Kanister problemlos untergebracht werden kann.

Diese Aufgabe wird erfindungsgemäß durch die im Kennzeichen des Anspruchs 1 angegebenen Merkmale gelöst.

Bei dem erfindungsgemäßen Vorschlag wird der bisher normaler Weise ungenutzte Raum innerhalb des Ersatzrades zur Unterbringung des Kanisters ausgenutzt. Da die Radgröße unter anderem auch von der Motorisierung abhängt, und Kraftfahrzeuge mit starken Motoren größere und/oder breitere Räder haben, besteht ein Zusammenhang zwischen der Größe des für die Unterbringung des Kanisters zur Verfügung stehenden Raumes und der Motorgröße, die wiederum Einfluß auf die Größe des Kraftstoffbehälters hat, so daß es möglich ist, in der das Ersatzrad aufnehmenden Mulde einen an die Größe des Kraftstoffbehälters angepaßten Kanister unterzubringen.

Durch den erfindungsgemäßen Vorschlag wird der weitere Vorteil erreicht, daß sich der Kanister im Kraftfahrzeug an einer Stelle befindet, die bei einem Unfall sehr gut geschützt ist. Bei der üblichen Anordnung des Kanisters im Motorraum kann insbesondere bei einem Frontalaufprall der Fall eintreten, daß der Kanister platzt und Kraftstoff auf die heiße Auspuffanlage gelangt und sich dort entzündet.

Ist die Mulde für die Aufnahme des Ersatzrades im Boden des Kofferraumes angeordnet, so wird zwischen der Umfangswand des Kanisters und der Umfangswand des den Kanister aufnehmenden Raumes ein nach unten zu offener Ringspalt gebildet, der mit dem Inneren des Kanisters durch eine oder mehrere Öffnungen in dessen Oberseite in Verbindung steht, während die Anschlußleitung für die Kraftstoffdämpfe unten in den Kanister mündet, so daß beim Betanken die verdrängte, mit Kraftstoffdämpfen beladene Luft von unten nach oben durch den Kanister strömt und dabei den Kraftstoff an das Filtermaterial abgibt. Umgekehrt wird im Betrieb Luft von oben nach unten durch den Filter gesaugt und der im Filter gespeicherte Kraftstoff mitgerissen.

Das Umschalten zwischen Auffangen der Kraftstoffdämpfe und Regenerieren des Aktivkohlefilters erfolgt mittels eines Servoventils mit drei Anschlüssen, von denen der erste Anschluß mit dem Kraftstoffbehälter, der zweite Anschluß mit dem Ansaugsystem der Brennkraftmaschine und der dritte Anschluß mit dem Kanister verbunden ist. Der Ventilkörper wird durch eine Feder in einer ersten Stellung gehalten, in welcher der erste Anschluß mit dem zweiten Anschluß verbunden und der dritte Anschluß gesperrt ist. Beim Betanken wird der Ventilkörper in eine zweite Stellung gebracht, in welcher der erste Anschluß mit dem dritten Anschluß verbunden und der zweite Anschluß gesperrt ist. Die Bewegung des Ventilkörpers in seine zweite Stellung kann durch eine Unterdruckdose oder durch einen Elektromagneten mittels eines Schalters erfolgen, der beim Öffnen des Tankverschlusses oder beim Einführen der Zapfpistole geschlossen wird.

Ein Ausführungsbeispiel der Erfindung wird im folgenden unter Bezugnahme auf die Zeichnungen beschrieben. Es zeigt :

**Fig. 1**   eine schematische Seitenansicht eines Kraftfahrzeuges, und

**Fig. 2**   einen Schnitt im Bereich der Kofferraummulde zur Aufnahme des Ersatzrades, aus welchem die Anordnung des Kanisters im einzelnen hervorgeht.

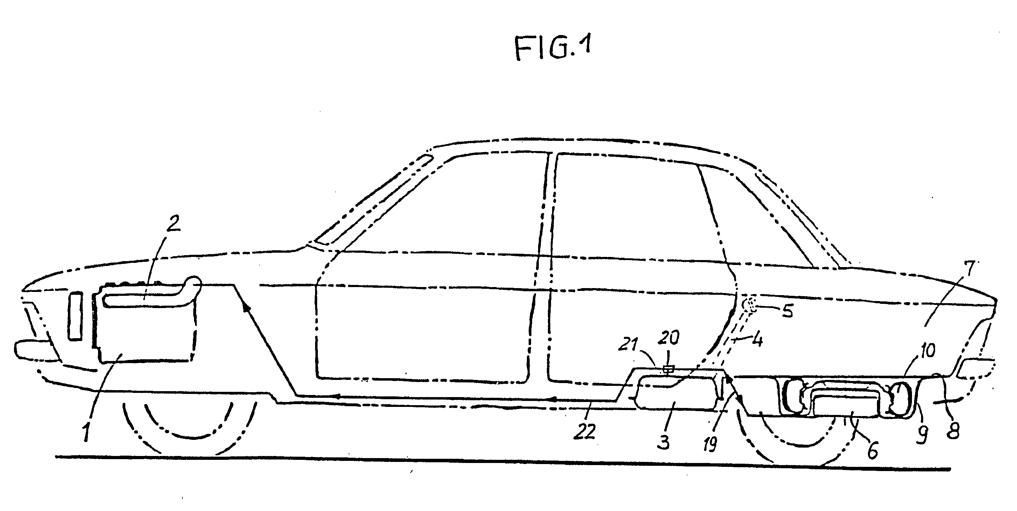

Das in Fig. 1 dargestellte Kraftfahrzeug wird von einer Brennkraftmaschine 1 mit einem Ansaugsystem 2 angetrieben. Mit 3 ist der Kraftstoffbehälter bezeichnet, der einen Einfüllstutzen 4 mit Tankverschlußdeckel 5 aufweist.

Das Kraftfahrzeug ist mit einer Anlage zum Auffangen von beim Betanken aus dem Kraftstoffbehälter 3 entweichenden Kraftstoffdämpfen versehen. Diese Anlage weist einen Kanister 6 mit einem Aktivkohlefilter auf, dessen eine Seite mit der Atmosphäre in Verbindung und dessen andere Seite beim Betanken mit dem Kraft-

2

stoffbehälter 3 und ansonsten mit dem Ansaugsystem 2 der Brennkraftmaschine 1 in Verbindung steht.

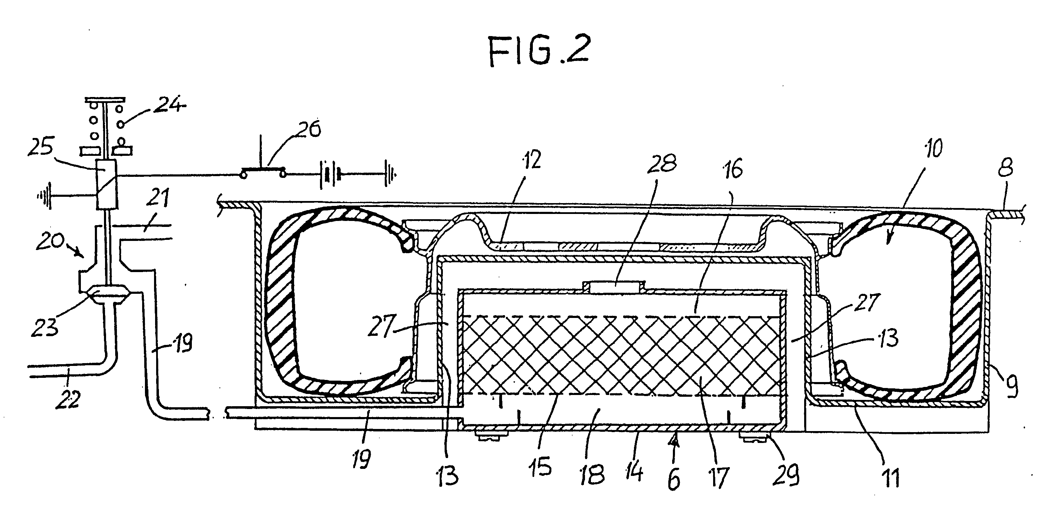

Das Kraftfahrzeug 1 weist einen Kofferraum 7 auf, in dessen Boden 8 eine Mulde 9 zur Aufnahme eines Ersatzrades 10 vorgesehen ist. Der Boden 11 der Mulde 9 ist im Bereich der Radschüssel 12 des Ersatzrades 10 nach oben gedrückt und bildet einen Topf 13, in welchem der Kanister 6 angeordnet ist, wie dies im einzelnen in Fig. 2 dargestellt ist. Der Kanister 6 weist ein scheibenförmiges Gehäuse 14 auf, das eine durch Lochbleche 15 und 16 begrenzte Lage aus Aktivkohle-Filtermaterial 17 enthält. Der Raum 18 unterhalb der Filterlage 17 steht mit einer Leitung 19 in Verbindung, die durch ein Servoventil 20 alternativ mit einer mit dem Kraftstoffbehälter 3 verbundenen Entlüftungsleitung 21 oder mit einer zum Ansaugsystem 2 der Brennkraftmaschine führenden Absaugeleitung 22 in Verbindung bringbar ist. Das Servoventil 20 weist einen Ventilkörper 23 auf, der im Ausführungsbeispiel durch eine Feder 24 in eine erste Stellung und durch einen Elektromagneten 25 in eine zweite Stellung bringbar ist. Im Stromkreis des Elektromagneten 25 ist ein Schalter 26 vorgesehen, der beim Betanken automatisch geschlossen wird, beispielsweise durch Abnehmen des Tankverschlußdeckels 5 oder durch Einführen der Zapfpistole in das Einfüllrohr 4. Der Schalter 26 ist in Schließstellung gezeigt, so daß der Elektromagnet 25 den Ventilkörper 23 nach unten schiebt und die Leitung 22 absperrt und eine Verbindung zwischen den Leitungen 19 und 21 herstellt. Demzufolge gelangt die beim Betanken des Kraftstoffbehälters 3 verdrängte, mit Kraftstoffdämpfen beladene Luft durch die Leitungen 21 und 19 zu dem Kanister 6. Das Gehäuse 14 des Kanisters 6 begrenzt mit der Umfangswand des Topfes 13 einen Ringspalt 27, der durch eine Öffnung 28 mit dem Bereich oberhalb des Filters 17 in Verbindung steht. Die verdrängte Luft strömt durch den Filter 17, gibt dort den Kraftstoff ab und gelangt durch den Ringspalt 27 ins Freie. Nach Beendigung des Tankvorganges öffnet sich der Schalter 26 und die Feder 24 kann den Ventilkörper 23 in seine zweite Stellung bringen, in welcher die Leitung 21 abgesperrt ist und die Leitungen 19 und 22 miteinander verbunden sind. Bei laufender Brennkraftmaschine 1 wird dann Luft durch den Filter 17 angesaugt und dabei der Filter regeneriert.

Anstelle eines Elektromagneten 25 kann auch eine andere Servoeinrichtung, beispielsweise eine Unterdruckdose verwendet werden, in deren Unterdruckleitung ein vom Schalter 26 betätigtes Ventil vorgesehen ist.

Der Kanister 6 wird durch Laschen 29 am Boden 11 der Mulde 9 angeschraubt.

## Patentansprüche

1. Kraftfahrzeug mit Antrieb durch eine Brennkraftmaschine (1), mit
— einem Kraftstoffbehälter (3),
— einer Anlage zum Auffangen von beim Betanken aus dem Kraftstoffbehälter entweichenden Dämpfen, die einen Kanister (6) aufweist, der mit der Atmosphäre in Verbindung steht und alternativ mit dem Kraftstoffbehälter (3) oder mit dem Ansaugsystem (2) der Brennkraftmaschine (1) in Verbindung bringbar ist, und
— einem Kofferraum (7) mit einer Mulde (9) zur Aufnahme eines Ersatzrades (10) mit einer Radschüssel (12), **dadurch gekennzeichnet,**
daß der Boden (11) der Mulde (9) im Bereich der Radschüssel (12) des Ersatzrades (10) topfartig eingezogen ist, und daß der Kanister (6) zumindest teilweise in dem so gebildeten Topf (13) angeordnet ist.

2. Kraftfahrzeug nach Anspruch 1, bei dem die Mulde im Boden des Kofferraumes angeordnet ist, dadurch gekennzeichnet, daß zwischen der Umfangswand des Kanisters (6) und der Umfangswand des den Kanister aufnehmenden Raumes ein nach unten zu offener Ringspalt (27) gebildet ist, der mit dem Inneren des Kanisters(6) durch mindestens eine Öffnung (28) in dessen Oberseite in Verbindung steht.

3. Kraftfahrzeug nach Anspruch 1 oder 2, gekennzeichnet durch ein Servoventil (20) mit drei Anschlüssen (19, 21, 22) von denen der erste Anschluß (21) mit dem Kraftstoffbehälter (3), der zweite Anschluß (22) mit dem Ansaugsystem (2) der Brennkraftmaschine (1) und der dritte Anschluß (19) mit dem Kanister (6) verbunden ist, und daß der Ventilkörper (23) durch eine Feder (24) in einer ersten Stellung gehalten ist, in welcher der zweite Anschluß (22) mit dem dritten Anschluß (19) verbunden und der erste Anschluß (21) gesperrt ist, und beim Betanken in eine zweite Stellung bringbar ist, in welcher der erste Anschluß (21) mit dem dritten Anschluß (19) verbunden und der zweite Anschluß (22) gesperrt ist.

## Claims

1. Motor vehicle powered by an internal combustion engine (1), with
● a fuel tank (3),
● an apparatus for trapping vapors escaping from the fuel tank while it is being filled, which has a canister

3

(6) that is in communication with the atmosphere and can be brought into.communication alternately with the fuel tank (3) or with the air intake system (2) of the internal combustion engine (1), and

• a trunk compartment (7) with a recess (9) for accommodating a spare wheel (10) with a web (12), characterized in that the bottom (11) of the recess (9) is drawn upwardly in the manner of a pot in the area of the web (12) of the spare wheel (10), and that the canister is disposed at least partially in the pot (13) thus formed.

2. Motor vehicle according to claim 1, in which the recess is disposed in the bottom of the trunk compartment, characterized in that, between the circumferential wall of the canister (6) and the circumferential wall of the space accommodating the canister, an annular gap (27) open at the bottom is formed, which is in communication with the interior of the canister (6) through at least one opening (28) in its top.

3. Motor vehicle according to claim 1 or 2, characterized by a servo valve (20) with three connections (19, 21, 22), of which the first connection (21) is connected to the fuel tank (3), the second connection (22) with the air intake system (2) of the internal combustion engine (1) and the third connection (19) to the canister (6), and that the valve body (23) is held by a spring (24) in a first position in which the second connection (22) is connected to the third connection (19) and the first connection (21) is stopped, and, while tanking, can be brought into a second position in which the first connection (21) is connected to the third connection (19) and the second connection (22) is stopped.

**Revendications**

1. Véhicule automobile entraîné par un moteur à combustion interne (1), comprenant

— un réservoir d'essence (3)

— un système pour capter les vapeurs s'échappant du réservoir d'essence lors du remplissage de celui-ci, muni d'une nourrice (6) qui communique avec l'atmosphère et peut être raccordée alternativement au réservoir d'essence (3) et au système d'aspiration (2) du moteur à combustion interne (1), et

— un coffre à bagages (7) avec une cuvette (9) pour la réception d'une roue de secours (10) avec un moyeu de roue (12),

**caractérisé en ce** que le fond (11) de la cuvette (9) est rentré à la manière d'un pot dans la région du moyeu de roue (12) de la roue de secours (10), et que la nourrice (6) est disposée au moins partiellement dans le pot (13) ainsi formé.

— 2. Véhicule automobile selon la revendication 1, dans lequel la cuvette est disposée dans le coffre à bagages, caractérisé en ce qu'entre la paroi périphérique de la nourrice (6) et la paroi périphérique de l'espace recevant la nourrice est constituée une fente annulaire (27) ouverte vers le bas laquelle communique avec l'intérieur de la nourrice (6) par au moins un orifice (28) ménagé dans la face supérieure de celle-ci.

3. Véhicule automobile selon l'une des revendications 1 ou 2, caractérisé en ce qu'il comprend une servosoupape (20) avec trois branchements (19, 21, 22) dont le premier branchement (21) est raccordé au réservoir d'essence (3), le second branchement (22), au système d'aspiration (2) du moteur à combustion interne (1) et le troisième branchement (19), à la nourrice (6) ; et que le corps de soupape (23) est maintenu par un ressort (24) dans une première position dans laquelle le second branchement (22) est relié au troisième branchement (19), alors que le premier branchement (21) est bloqué, et qu'il peut être amené lors du remplissage du réservoir dans une seconde position dans laquelle le premier branchement (21) communique avec le troisième branchement (19) alors que le second branchement (22) est bloqué.

FIG.1

EP 0 401 251 B1

FIG.2

EP 0 401 251 B1